# EUROPÄISCHE PATENTSCHRIFT

(11) **EP 1 668 264 B1**
(45) Veröffentlichungstag und Bekanntmachung des Hinweises auf die Patenterteilung: **10.12.2008**
(21) Anmeldenummer: 04786217.2
(22) Anmeldetag: 24.08.2004
(51) Int. Cl.: F16C 29/00

(54) **FÜHRUNGSSCHIENE FÜR FÜHRUNGSWAGEN EINER LINEARFÜHRUNG**
GUIDE RAIL FOR GUIDE CARRIAGES OF A LINEAR GUIDEWAY
RAIL DE GUIDAGE POUR CHARIOT DE GUIDAGE D'UN GUIDAGE LINEAIRE

(30) Priorität: 01.10.2003 DE 10345871
(43) Veröffentlichungstag der Anmeldung: 14.06.2006
(73) Patentinhaber: Schaeffler KG, 91074 Herzogenaurach (DE)
(72) Erfinder: GUTH, Jörg, 66904 Brücken (DE)
(86) Internationale Anmeldenummer: PCT/EP2004/009428
(87) Internationale Veröffentlichungsnummer: WO 2005/033533

(56) Entgegenhaltungen:
- DE-A- 3 435 062
- DE-A- 4 337 859
- DE-A- 19 758 346
- PATENT ABSTRACTS OF JAPAN Bd. 1995, Nr. 08, 29. September 1995 (1995-09-29) & JP 07 124831 A (MORI SEIKI CO LTD), 16. Mai 1995 (1995-05-16)

## Beschreibung

Die vorliegende Erfindung betrifft eine Führungsschiene einer Linearführung. Derartige Führungsschienen werden beispielsweise im Werkzeugmaschinenbau eingesetzt, um Lasten einwandfrei linear zu führen.

Aus DE 197 58 346 A1 beispielsweise ist ein Führungssystem bekannt geworden, bei dem die Führungsschiene mit ihrer Unterseite auf eine Montagefläche eines Anschlussteils aufgesetzt und über Befestigungsschrauben befestigt ist, wobei die Führungsschiene Durchgangsbohrungen aufweist, durch die Befestigungsschrauben zum Verschrauben mit dem Anschlußteil hindurchgeführt werden können. Diese Befestigungsschrauben werden von der der Unterseite gegenüberliegenden Oberseite der Führungsschiene betätigt, also geschraubt. An zwei gegenüberliegenden Längsseiten ist die Führungsschiene mit Laufbahnen für Wälzkörper des Führungswagens versehen. Die Führungsschiene ist aus mehreren hintereinander angeordneten Schienenteilen zusammengesetzt, wobei einander benachbarte Schienenteile durch Verbindungselemente miteinander verbunden sind. Die Schienenteile sind mit Hilfe von in Keilnuten eingesetzten Keilen oder Federn in Ausrichtung miteinander verbunden, wobei die Keilnuten an einer der Befestigungsseiten vorgesehen sind. Die Schienenteile sind mit Bolzen auf einer Tragkonstruktion befestigt. Jedes Schienenteil ist auf einer Tragkonstruktion mittels Basisteilen mit Befestigungsschrauben befestigt. Wenn der Keil in den Keilnuten festsitzt, lassen sich die beiden derart miteinander verbundenen Schienenteile nicht mehr oder nur noch mit sehr großen Kraftaufwand relativ zueinander verschieben um eine einwandfreie Ausrichtung dieser beiden Maschinenteile zueinander sicherzustellen. Wenn beispielsweise die Keilnuten nicht einwandfrei zentrisch an den Maschinenteilen ausgebildet sind, kann sich ein - wenn auch nur geringfügiger - Seitenversatz zwischen dem beiden Schienenteilen einstellen, sodass im Übergang von dem einen Schienenteil auf das andere Schienenteil im Laufbahnbereich eine Kante in unerwünschter Weise gebildet ist. Wenn der Keil in den Keilnuten mit Spiel in den Keilnuten angeordnet ist, so lassen sich zwar die beiden Schienenteile beispielsweise von Hand einwandfrei aneinander ausrichten, sodass eine Kantenbildung im Übergang von dem einen Schienenteil auf das andere Schienenteil ausgeschlossen ist. Wenn jedoch die Schienenteile mit Befestigungsschrauben an das Anschlussteil angeschraubt werden, können während es Schraubvorganges - wenn auch nur geringfügige - Verschiebungen der beiden Schienenteile zueinander auftreten. Wenn die Schienenteile dann schließlich fest sitzen, kann wieder ein unerwünschter Versatz zwischen den beiden Schienenteilen gebildet sein.

Aufgabe der vorliegenden Erfindung ist es, eine Führungsschiene nach den Merkmalen des Oberbegriffs des Anspruchs 1 anzugeben, die sich einwandfrei montieren läßt.

Erfindungsgemäß wird diese Aufgabe dadurch gelöst, dass ein Spannelement vorgesehen ist, um die verbundenen Schienenteile gegeneinander zu verspannen. Bei der erfindungsgemäßen Führungsschienen lassen sich die Schienenteile einwandfrei zueinander ausrichten. Die so einwandfrei aneinander ausgerichteten Schienenteile werden dann mittels des Spanelementes miteinander verspannt. In dieser verspannten Anordnung sind Verschiebungen der Schienenteile gegeneinander ausgeschlossen. Die so miteinander verspannten Schienenteile können nun in bekannter Weise problemlos beispielsweise mittels der Befestigungsschrauben an ein Anschlussteil aufgeschraubt werden. Gelegentlich muß ein Höhenversatz ausgeglichen werden. Dies kann auftreten, wenn die Führungsschiene mit ihrer Unterseite auf der Montagefläche des Anschlussteils aufliegt, die Montagefläche jedoch nicht einwandfrei plan ist. Wenn die miteinander verbundenen Schienenteile einwandfrei zueinander ausgerichtet und gegeneinander verspannt sind, kann ein Ausgleichselement zwischen das Anschlussteil und die Führungsschiene eingesetzt werden.

Üblicherweise werden die Führungsschienen von Linearführungen mit Befestigungsschrauben an das Anschlussteil angeschraubt. Zu diesen Zweck weisen die Führungsschienen Durchgangsbohrungen auf, die die Oberseite und die Unterseite der Führungsschiene durchstoßen. Die Befestigungsschrauben werden von der Oberseite der Führungsschiene her betätigt. Für eine einfache Montage sieht eine erfindungsgemäße Weiterbildung vor, dass das Spannelement von der Oberseite der Führungsschiene her betätigbar ist. Komplizierte Umbauten oder Umgriffe sind bei der erfindungsgemäßen Führungsschiene nicht erfolderlich.

Je nach Einsatzfall werden auch Linearführungen eingesetzt bei denen die Führungsschiene gekrümmte Schienenteile, also Bogenteile aufweist. Hier kann es zweckmäßig sein, wenn das Verbindungselement ein Gelenk aufweist, dessen Gelenkachse quer zur Längsachse der Führungsschiene angeordnet ist. Ein derartiges Verbindungselement kann problemlos für unterschiedliche Krümmungen bzw. Übergänge von gekrümmten Schienenteilen auf gerade Schienenteile eingesetzt werden.

Das Spannelement ist vorzugsweise so beschaffen, dass unter Betätigung des Spannelementes zwei einander benachbart angeordnete Schienenteile mit ihren einander zugewandten Stirnflächen aneinander angedrückt werden können. Wenn die Stirnflächen flächig miteinander in Kontakt und aneinander angedrückt sind, liegt ein Kraftschluß zwischen den beiden Schienenteilen vor. Der Kraftschluß ist abhängig von der Andruckkraft und einem Reibungskoeffizienten, der sich für die gegebene Paarung ermitteln lässt.

Erfindungsgemäße Führungsschienen können an ihren Längsseiten Laufdrähte aufweisen, deren Mantelfläche die Laufbahnen für die Wälzkörper bilden, wobei die Wälzkörper durch Laufrollen gebildet sein können, die mit ihren Laufrillen auf den Laufdrähten abwälzen.

Erfindungsgemäße Führungsschienen eignen sich aber in vorteilhafter Weise ebenso für Linearführungen, bei denen die Laufbahnen durch an der Führungsschiene ausgebildete Kugelrillen gebildet sind, an denen im Führungswagen endlos umlaufende Kugeln abwälzen. Anstelle der Kugelrillen können auch ebene Laufflächen vorgesehen sein, an denen endlos im Führungswagen umlaufende Rollen abwälzen.

Die Laufbahnen können auch in bekannter Weise Gleitbahnen sein, wobei der Führungswagen dann ebenfalls mit derartigen Gleitbahnen versehen ist, die an den Laufbahnen oder Gleitbahnen der Führungsschiene gleitgelagert sind. In diesem Fall ist der Führungswagen auf der Führungsschiene gleitgelagert.

Das Verbindungselement und das Spannelement können voneinander unabhängige, vereinzelte Elemente sein. In günstiger Weise können die beiden Elemente als gemeinsames Element ausgebildet sein. Beispielsweise sind handelsübliche Verbindungselemente bekannt, die zugleich auch die Funktion des Spannelements übernehmen können.

Mit der erfindungsgemäßen Führungsschiene lässt sich ein einfaches und sicheres Verfahren zum Ausrichten und Fixieren der einander benachbart angeordneten Schienenteile der Führungsschiene durchführen, und zwar nach den folgenden Schritten:
Zunächst werden zwei einander benachbart angeordnete Schienenteile mittels des Verbindungselementes miteinander verbunden und - sofern die noch nicht geschehen ist - mit ihrer Unterseite auf die Montagefläche aufgesetzt. In dieser Situation lassen sich die Schienenteile gut von Hand ausrichten. Nun wird das Spannelement betätigt, bis die Stirnflächen der beiden Schienenteile so weit aneinander angedrückt sind, dass zum Ausrichten der Schienenteile zueinander Verschiebungen der Schienenteile unter Aufbringen einer Stellkraft noch möglich sind. Nun wird eine Prüflehre auf die Führungsschiene aufgesetzt, die vorzugsweise mit ihren Prüfflächen sowohl an den Laufbahnen des einen Schienenteils als auch an den Laufbahnen des anderen Schienenteils anliegt. Mit Hilfe der Prüflehre lässt sich feststellen, ob an der Stoßstelle der beiden Schienenteile Kanten im Bereich der Laufbahnen gebildet sind. Beispielsweise kann als Prüflehre der Führungswagen selbst verwendet werden, dessen Wälzkörper die Wälzflächen aufweisen, die die Prüfflächen bilden. Wenn der Führungswagen über die Stoßstelle gefahren wird, lässt sich problemlos feststellen, ob an der Stoßstelle im Bereich der Laufbahnen eine unerwünschte Kante noch vorhanden ist. Sollte dies der Fall sein, kann eine erforderliche Ausrichtung der Schienenteile unter Aufbringung der Stellkraft erfolgen. Zwar sind in dieser Situation die Schienenteile mit ihrem aneinander zugewandten Stirnflächen bereits aneinander gedrückt. Um sicherzugehen, dass während des Befestigungsvorgangs der Führungsschiene an das Anschlussteil unerwünschte Verschiebungen der Maschinenteile zueinander auf jeden Fall ausgeschlossen sind, ist es vorteilhaft, das Spannelement wiederholt zu betätigen, um die Andruckkraft zwischen den beiden Stirnflächen weiter zu erhöhen, wodurch die einander benachbarten Schienenteile in ihrer ausgerichteten Lage einwandfrei zueinander fixiert sind. Nun kann die Führungsschiene in bekannter Weise problemlos mittels Befestigungselementen an einem Anschlussteil befestigt werden, ohne dass ein unerwünschtes Ausweichen eines der Schienenteile erfolgt.

Nachstehend wird die Erfindung anhand von zwei in insgesamt fünf Figuren abgebildeten Ausführungsbeispielen näher erläutert. Es zeigen:
- Figur 1: eine erfindungsgemäße Führungsschiene in teilweise gebrochener Darstellung
- Figur 2: einen Querschnitt durch die Führungsschiene aus Figur 1
- Figur 3: die Führungsschiene aus Figur 1 mit montierten Führungswagen
- Figur 4: ein an sich bekanntes Verbindungselement zum Verbinden von zwei Schienenteilen,
- Figur 5: ein weiteres an sich bekanntes Verbindungselement zum Verbinden von zwei Schienenteilen und
- Figur 6: eine weitere erfindungsgemäße Führungsschiene.

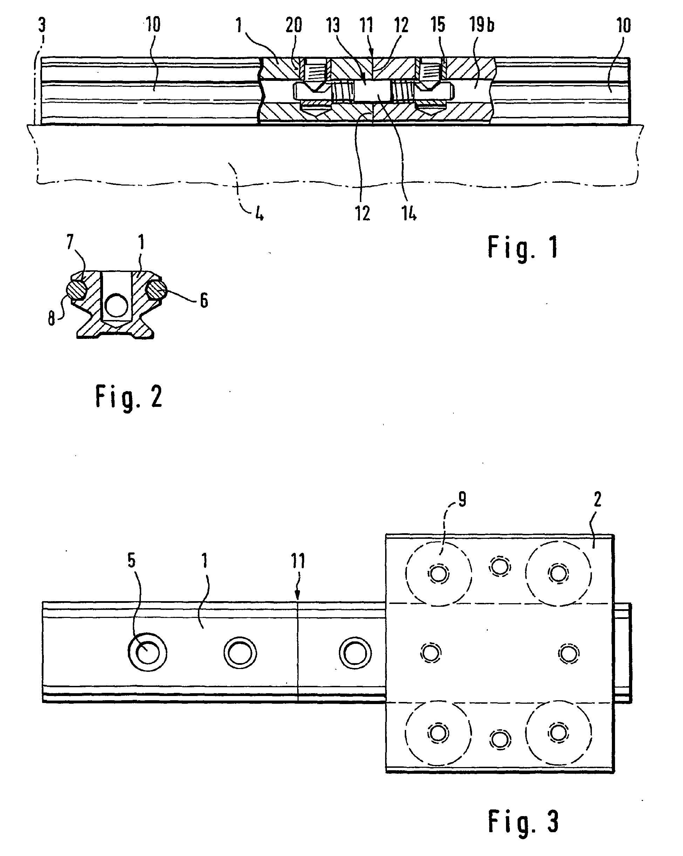

In den Figuren 1 bis 3 ist eine erfindungsgemäße Führungsschiene 1 einer Linearführung abgebildet, an der ein Führungswagen 2 längsbeweglich gelagert ist. Die Führungsschiene 1 liegt mit ihrer Unterseite auf einer Montagefläche 3 eines Anschlussteils 4 auf und ist an dieses Anschlussteil 4 angeschraubt. Das Anschlussteil 4 ist hier der Einfachheit halber nur angedeutet. Die Führungsschiene 1 ist mit mehreren hintereinander angeordneten Durchgangsbohrungen 5 zur Aufnahme von Befestigungsschrauben versehen. Die Durchgangsbohrungen 5 erstrecken sich von der der Unterseite gegenüberliegenden Oberseite der Führungsschiene bis zu der Unterseite der Führungsschiene 1.

Der Figur 2 ist zu entnehmen, dass an beiden gegenüberliegenden Längsseiten Laufdrähte 6 in Nuten 7 eingesetzt sind, wobei die konvexe Mantelfläche der Laufdrähte 6 als Laufbahn 8 für Wälzkörper des Führungswagens 2 ausgebildet sind. Der Figur 3 ist zu entnehmen, dass die Wälzkörper durch Laufrollen 9 gebildet sind, die an dem Führungswagen 2 drehbar aufgenommen sind. Die Laufrollen 9 wälzen mit ihrem Umfang an den Laufbahnen 8 der Laufdrähte 6 ab.

Den Figuren 1 und 3 ist zu entnehmen, dass die Führungsschiene aus mehreren hintereinander angeordneten Schienenteilen 10 zusammengesetzt ist, wobei an der Stoßstelle 11 zwei einander benachbarter Schienenteile 10 deren Stirnflächen 12 aneinander anliegen.

Der Figur 1 ist zu entnehmen, dass zwei benachbarte Schienenteile 10 mittels eines Verbindungselementes 13 miteinander verbunden sind.

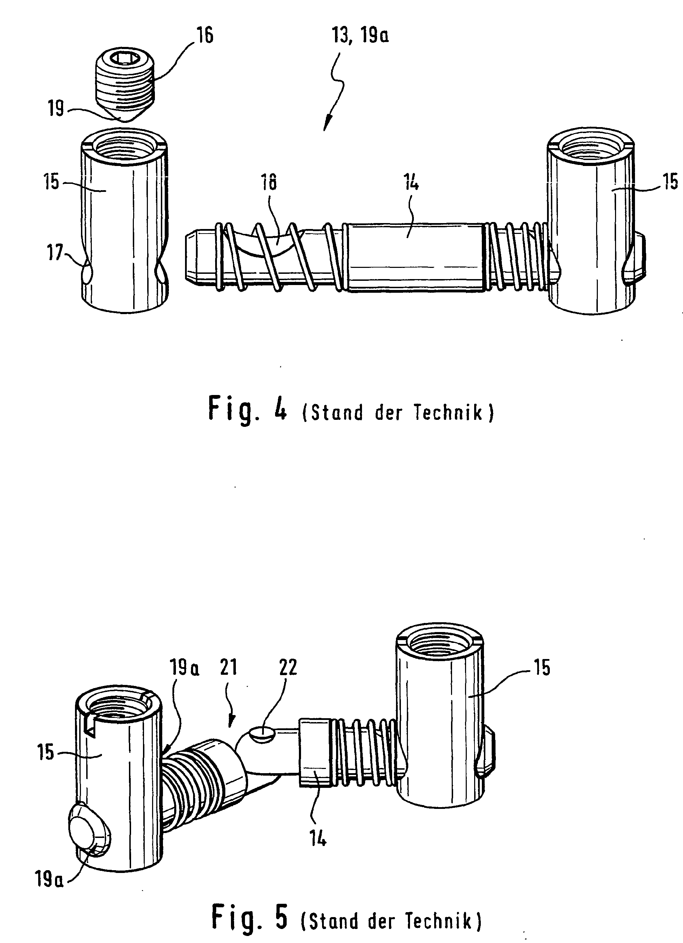

Figur 4 zeigt das bei den Ausführungsbeispiel gemäß den Figuren 1 bis 3 eingesetzte Verbindungselement 13, dass bereits zum Stand der Technik zählt. Es umfasst im wesentlichen einen Kolben 14, zwei Hülsen 15, in die jeweils eine Spannschraube 16 eingeschraubt ist. Die Hülsen 15 sind jeweils mit einer Querbohrung 17 versehen, in die der Kolben 14 mit jeweils einem Ende eingreift. Der Kolben 14 ist an seinen beiden Enden mit jeweils einer keilförmigen Tasche 18 versehen. Die Spannschraube 16 ist an ihrem der keilförmigen Tasche 18 zugewandten Ende mit einen kegelförmigen Kopf 19 versehen. Wenn die Spannschraube 16 einwärts in die Hülse 15 eingedreht wird, gelangt der kegelförmige Kopf 19 in Eingriff mit der keilförmigen Tasche 18. Aufgrund einer Keilwirkung zwischen dem kegeligen Kopf 19 und der keilförmigen Wandung der keilförmigen Tasche 18 erfolgt bei weiterer Einwärtsdrehung der Spannschraube 16 eine Verschiebung des Kolbens 14 gegenüber der jeweiligen Hülse 15. In anderen Worten ausgedrückt: der Abstand der beiden Hülsen 15 zueinander lässt sich über die Stellung der Spannschrauben 16 in der Hülse 15 einstellen. Die Hülse 15, die Spannschraube 16 und der mit dem keilförmigen Taschen 18 versehene Kolben 14 bilden ein Spannelement 19a, das in das Verbindungselement 13 integriert ist.

Der Figur 1 ist zu entnehmen, dass diese Hülsen 15 in Bohrungen 20 eingesetzt sind, wobei diese Bohrungen 20 vorliegend als Sackloch ausgeführt sind. Die Bohrungen 20 gehen von der Oberseite der Führungsschiene 1 aus. Auf diese Weise ist sichergestellt, dass die Spannschrauben 16 von der Oberseite der Führungsschiene 1 her zugänglich - also zu betätigen - sind. Ebenso wie die Spannschrauben 16 können auch die in den Durchgangsbohrungen 5 eingesetzten Befestigungsschrauben 5 von der Oberseite der Führungsschiene her angezogen werden.

In der Darstellung gemäß den Figuren 1 und 3 sind die Spannschrauben 16 soweit angezogen, dass die Stirnflächen 12 der beiden Schienenteile 10 gegeneinander angedrückt sind; eine Relativverschiebung zwischen den beiden Schienenteilen 10 ist soweit ausgeschlossen, dass die Führungsschiene 1 mit den nicht dargestellten Befestigungsschrauben einwandfrei an das Anschlussteil 4 angeschraubt und daran befestigt werden kann. Während dieses Befestigungsvorgangs ist ein Verrutschen eines der beiden Schienenteile 10 ausgeschlossen.

Das ebenfalls zum Stand der Technik zählende, in Figur 5 abgebildete Verbindungselement 21 unterscheidet sich von dem aus der Figur 4 lediglich dadurch, dass der Kolben 14 mit einem Gelenk 22 ausgerüstet ist. Das Spannelement 19a ist wie bei dem Verbindungselement 13 ausgeführt.

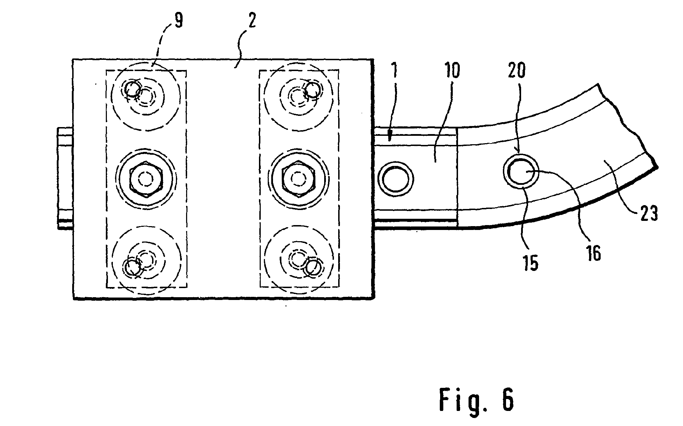

Dieses Verbindungselement 21 ist bei der in Figur 6 abgebildeten Führungsschiene eingesetzt. Der Figur 6 ist zu entnehmen, dass im Anschluß an ein gerades Schienenteil 10 der Führungsschiene 1 ein Bogenteil 23 anschließt. Für Zwecke, bei denen ein Bogenteil 23 an ein gerades Schienenteil 10 anschließt ist das Verbindungselement 21 mit dem beschriebenen Gelenk 22 geeignet. Die Gelenkachse ist quer zur Längsachse der Führungsschiene 1 angeordnet, und parallel zur Mittelpunktsachse des Bogenteils 23. Das Gelenk 22 ermöglicht den Einsatz dieser Verbindungselemente 21 bei beliebigen Kombinationen von geraden oder gekrümmten Schienenteilen.

Der Figur 1 ist zu entnehmen, dass der Kolben 14 in Kolbenbohrungen 19b eintaucht, die an den Schienenteilen 10 vorgesehen sind, wobei diese Kolbenbohrungen 19b in Längsrichtung der Schienenteile 10 angeordnet sind.

Anstelle der hier beschriebenen an sich bekannten Verbindungselemente eignen sich für die vorliegende Erfindung zum Beispiel alle Verbindungselemente, bei denen die verbundenen Schienenteile mit ihren einander zugewandten Stirnflächen aneinander gedrückt werden können, um eine kraftschlüssige Verbindung zu erzeugen. Beispielsweise ist denkbar, dass anstelle des Kolbens eine Gewindestange eingesetzt wird, die mit zwei Gewindeabschnitten versehen ist, von denen das eine ein Linksgewinde und von denen das andere ein Rechtsgewinde aufweist. Der eine Gewindeabschnitt greift dann in eine Gewindebohrung des einen Schienenteils ein und der andere Gewindeabschnitt greift in eine weitere Gewindebohrung des anderen Schienenteils ein. Wenn die Gewindestange in die eine Richtung gedreht wird schrauben sich die Gewindeabschnitte weiter in die Gewindebohrungen ein, mit der Folge, dass die beiden Stirnflächen der Schienenteile aneinander angedrückt werden, um die gewünschte reibschlüssige Verbindung herzustellen.

Die Erfindung umfasst auch Führungsschienen, bei denen die Verbindungselemente und die Spannelemente jeweils als voneinander getrennte Elemente ausgeführt sind.

### Bezugszeichen

- 1: Führungsschiene
- 2: Führungswagen
- 3: Montagefläche
- 4: Anschlußteil
- 5: Durchgangsbohrung
- 6: Laufdraht
- 7: Nut
- 8: Laufbahn
- 9: Laufrolle
- 10: Schienenteil
- 11: Stoßstelle
- 12: Stirnfläche
- 13: Verbindungselement
- 14: Kolben
- 15: Hülse
- 16: Spannschraube
- 17: Querbohrung
- 18: keilförmige Tasche
- 19: kegelförmiger Kopf
- 19a: Spannelement
- 19b: Kolbenbohrung
- 20: Bohrung
- 21: Verbindungselement
- 22: Gelenk
- 23: Bogenteil

## Patentansprüche

1. Führungsschiene (1) einer Linearführung, an der ein Führungswagen (2) längsverschieblich lagerbar ist, wobei die Führungsschiene (1) eine Unterseite aufweist, mit der sie auf einer Montagefläche (3) angeordnet werden kann, sowie zwei gegenüberliegende Längsseiten, die mit Laufbahnen (8) versehen sind, wobei hintereinander angeordnete Schienenteile (10) der Führungsschiene (1) durch Verbindungselemente (13, 21) miteinander verbunden sind, **dadurch gekennzeichnet, daß** ein Spannelement (19a) vorgesehen ist, um die verbundenen Schienenteile (10) gegeneinander zu verspannen.

2. Führungsschiene nach Anspruch 1, bei der mittels des Spannelementes (19a) zwei einander benachbart angeordnete Schienenteile (10) mit ihren einander zugewandten Stirnflächen (12) aneinanander drückbar sind.

3. Führungsschiene nach Anspruch 1, bei der das Spannelement (19a) von einer der Unterseite gegenüberliegenden Oberseite der Führungsschiene (1) betätigbar ist.

4. Führungsschiene nach Anspruch 1, bei der das Verbindungselement (21) zusätzlich ein Gelenk (22) aufweist, dessen Gelenkachse quer zur Längsachse der Führungsschiene (1) angeordnet ist.

5. Führungsschiene nach Anspruch 1, bei der die Laufbahnen (8) an Laufdrähten (6) ausgebildet sind, wobei die Wälzkörper durch Laufrollen (9) gebildet sind, die auf den Laufdrähten (6) abwälzen.

6. Führungsschiene nach Anspruch 1, bei der die Laufbahnen durch an der Führungsschiene ausgebildete Kugelrillen gebildet sind, an denen im Führungswagen endlos umlaufende Kugeln abwälzen.

7. Führungsschiene nach Anspruch 1, bei der die Laufbahnen durch an der Führungsschiene ausgebildete ebene Laufflächen gebildet sind, an denen im Führungswagen endlos umlaufende Rollen abwälzen.

8. Verfahren zum Ausrichten und Fixieren von einander benachbart angeordneten Schlenentellen (10) der Führungsschiene (1) gemäß Anspruch 1 nach den folgenden Schritten:
- Verbinden von zwei einander benachbart angeordneten Schienenteilen (10) mittels des Verbindungselementes (13, 21),
- Anordnen der Schienenteile (10) mit ihrer Unterseite auf der Montagefläche (3), sofern dies nicht bereits vor dem zuvor genannten Schritt geschehen ist,
- betätigen des Spannelementes (19a), bis die Stirnflächen der beiden Enden der Schienenteile soweit aneinander angedrückt sind, daß zum Ausrichten der Schienenteile (10) zueinander Verschiebungen der Schienenteile (10) unter Aufbringen einer Stellkraft noch möglich sind,
- Aufsetzen einer Prüflehre auf die Führungsschiene (1), die mit Prüfflächen sowohl an den Laufbahnen (8) des einen Schienenteiles (10) als auch an den Laufbahnen (8) des anderen Schienenteiles (10) anliegt
- gegebenenfalls erneutes Betätigen des Spannelementes (19a), wodurch die einander benachbarten Schienenteile (10) in ihrer ausgerichteten Lage einwandfrei zueinander fixiert sind,
- Befestigen der Führungsschiene (1) mittels Befestigungselementen an einem Anschlussteil (4).

9. Verfahren nach Anspruch 8, bei dem die Prüflehre durch den Führungswagen (2) gebildet ist, dessen Wälzkörper mit Wälzflächen versehen sind, die die Prüfflächen bilden.

## Claims

1. Guide rail (1) of a linear guide, on which a guide carriage (2) can be mounted longitudinally displaceably, the guide rail (1) having an underside, by means of which it can be arranged on a mounting surface (3), and two opposite longitudinal sides which are provided with running tracks (8), rail parts (10) of the guide rail (1) which are arranged one behind the other being connected to one another by means of connecting elements (13, 21), **characterized in that** a tension element (19a) is provided in order to brace the connected rail parts (10) with respect to one another.

2. Guide rail according to Claim 1, in which two rail parts (10) arranged adjacent to one another can be pressed with their mutually confronting end faces (12) against one another by means of the tension element (19a).

3. Guide rail according to Claim 1, in which the tension element (19a) can be actuated from a top side of the guide rail (1) which lies opposite the underside.

4. Guide rail according to Claim 1, in which the connecting element (21) additionally has a joint (22), the joint axis of which is arranged transversely to the longitudinal axis of the guide rail (1).

5. Guide rail according to Claim 1, in which the running tracks (8) are formed on running wires (6), the rolling bodies being formed by running rollers (9) which roll on the running wires (6).

6. Guide rail according to Claim 1, in which the running tracks are formed by ball grooves which are formed on the guide rail and on which balls rotating endlessly in the guide carriage roll.

7. Guide rail according to Claim 1, in which the running tracks are formed by planar running surfaces which are formed on the guide rail and on which rollers rotating endlessly in the guide carriage roll.

8. Method for aligning and fixing rail parts (10), arranged adjacently to one another, of the guide rail (1) according to Claim 1 according to the following steps:
- connection of two rail parts (10) arranged adjacently to one another by means of the connecting element (13, 21),
- arrangement of the rail parts (10) with their underside on the mounting surface (3), insofar as this has not already taken place before the abovementioned step,
- actuation of the tension element (19a) until the end faces of the two ends of the rail parts are pressed against one another to an extent such that displacements of the rail parts (10) by the application of an actuating force are still possible in order to align the rail parts (10) with one another,
- placing of a test gage onto the guide rail (1), said test gage bearing with test surfaces both against the running tracks (8) of one rail part (10) and against the running tracks (8) of the other rail part (10),
- if appropriate, renewed actuation of the tension element (19a), with the result that the rail parts (10) adjacent to one another are satisfactorily fixed in their aligned position with respect to one another,
- fastening of the guide rail (1) to a connection part (4) by means of fastening elements.

9. Method according to Claim 8, in which the test gage is formed by the guide carriage (2) the rolling bodies of which are provided with rolling surfaces which form the test surfaces.

## Revendications

1. Rail de guidage (1) d'un guidage linéaire, sur lequel un chariot de guidage (2) peut être monté de manière à pouvoir coulisser en longueur, le rail de guidage (1) présentant un côté inférieur avec lequel il peut être disposé sur une surface de montage (3), ainsi que deux côtés longitudinaux opposés qui sont pourvus de pistes de roulement (8), des parties de rail (10) du rail de guidage (1) disposées les unes derrière les autres étant connectées les unes aux autres par des éléments de liaison (13, 21), **caractérisé en ce qu'**un élément de serrage (19a) est prévu pour serrer les unes contre les autres les parties de rail (10) connectées.

2. Rail de guidage selon la revendication 1, dans lequel deux parties de rail (10) adjacentes l'une à l'autre peuvent être pressées l'une contre l'autre au moyen de l'élément de serrage (19a) avec leurs faces frontales (12) tournées l'une vers l'autre.

3. Rail de guidage selon la revendication 1, dans lequel l'élément de serrage (19a) peut être actionné par un côté supérieur du rail de guidage (1) opposé au côté inférieur.

4. Rail de guidage selon la revendication 1, dans lequel l'élément de liaison (21) présente en outre une articulation (22) dont l'axe d'articulation est disposé transversalement à l'axe longitudinal du rail de guidage (1).

5. Rail de guidage selon la revendication 1, dans lequel les pistes de roulement (8) sont réalisées sur des fils de roulement (6), les corps de roulement étant formés par des galets de roulement (9) qui roulent sur les fils de roulement (6).

6. Rail de guidage selon la revendication 1, dans lequel les pistes de roulement sont formées par des rainures à billes réalisées sur le rail de guidage, sur lesquelles roulent des billes tournant sans fin dans le chariot de guidage.

7. Rail de guidage selon la revendication 1, dans lequel les pistes de roulement sont formées par des surfaces de roulement planes réalisées sur le rail de guidage, sur lesquelles roulent des rouleaux tournant sans fin dans le chariot de guidage.

8. Procédé pour orienter et fixer des parties de rail (10) adjacentes du rail de guidage (1) selon la revendication 1, comprenant les étapes suivantes :
- connexion de deux parties de rail (10) adjacentes au moyen de l'élément de liaison (13, 21),
- agencement des parties de rail (10) avec leur côté inférieur sur la surface de montage (3), dans la mesure où ceci ne s'est pas déjà produit dans l'étape précédente,
- actionnement de l'élément de serrage (19a), jusqu'à ce que les faces frontales des deux extrémités des parties de rail soient pressées l'une contre l'autre de telle sorte que pour l'orientation des parties de rail (10) l'une par rapport à l'autre, des déplacements des parties de rail (10) soient encore possibles en appliquant une force de réglage,
- mise en place d'un gabarit de contrôle sur le rail de guidage (1), lequel s'applique avec des surfaces de contrôle à la fois sur les pistes de roulement (8) d'une partie de rail (10) et sur les pistes de roulement (8) de l'autre partie de rail (10),
- actionnement éventuellement renouvelé de l'élément de serrage (19a), de sorte que les parties de rail adjacentes (10) soient fixées parfaitement l'une par rapport à l'autre dans leur position alignée,
- fixation du rail de guidage (1) au moyen d'éléments de fixation sur une partie de raccordement (4).

9. Procédé selon la revendication 8, dans lequel le gabarit de contrôle est formé par le chariot de guidage (2) dont les corps de roulement sont pourvus de surfaces de roulement qui forment les surfaces de contrôle.
